(19) Europäisches Patentamt / European Patent Office / Office européen des brevets

(11) EP 3 489 303 B1

(12) EUROPEAN PATENT SPECIFICATION

(45) Date of publication and mention of the grant of the patent:
**27.05.2026 Bulletin 2026/22**

(21) Application number: **17834172.3**

(22) Date of filing: **21.07.2017**

(51) International Patent Classification (IPC):
***C08L 69/00*** *(2006.01)* ***C08K 5/17*** *(2006.01)*
***C08L 47/00*** *(2006.01)*

(52) Cooperative Patent Classification (CPC):
(C-Sets available)
**C08L 69/00; C08K 5/17; C08L 47/00;**
C08L 2205/02 (Cont.)

(86) International application number:
**PCT/JP2017/026384**

(87) International publication number:
**WO 2018/021164 (01.02.2018 Gazette 2018/05)**

(54) **POLYCARBONATE RESIN COMPOSITION**

POLYCARBONATHARZZUSAMMENSETZUNG

COMPOSITION DE RÉSINE DE POLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**25.07.2016 JP 2016145677**
**05.08.2016 JP 2016154606**
**30.08.2016 JP 2016167912**
**31.03.2017 JP 2017072141**

(43) Date of publication of application:
**29.05.2019 Bulletin 2019/22**

(73) Proprietor: **Mitsubishi Engineering-Plastics Corporation**
**Tokyo 105-0021 (JP)**

(72) Inventors:
- **HARADA, Hiroyuki**
  **Hiratsuka-shi**
  **Kanagawa 254-0016 (JP)**
- **SCHRAUWEN, Bernardus Antonius Gerardus**
  **5595 CL Leende (NL)**
- **KARLIK, Dennis**
  **5935 BR Steyl (NL)**

(74) Representative: **EP&C**
**P.O. Box 3241**
**2280 GE Rijswijk (NL)**

(56) References cited:
**WO-A1-2017/098992 JP-A- 2005 344 026**
**JP-A- 2005 344 026 JP-A- 2016 003 329**
**JP-A- 2017 110 045 JP-A- 2017 132 913**

- **VIPIN V. RAJAN ET AL: "Online monitoring of the influence of the chemical structure of hindered amines on the hydrolysis of polycarbonate in a polycarbonate/poly(acrylonitrile-butadiene-styrene) blend by ultraviolet-visible spectroscopy", JOURNAL OF APPLIED POLYMER SCIENCE, vol. 119, no. 1, 5 January 2011 (2011-01-05), US, pages 491 - 499, XP055658873, ISSN: 0021-8995, DOI: 10.1002/app.32646**
- **SUNIL S.PARIKH ET AL.: "Chemiluminescence in evaluating the thermal oxidative stability of acrylonitrile-butadiene-styrene (ABS) copolymers. II. ABS/polycarbonate (PC) blends", JOURNAL OR ENVIRONMENTAL POLYMER DEGRADATION, vol. 1, no. 4, 1993, pages 275 - 279, XP055569725**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 69/00, C08K 5/17, C08L 55/02;**
**C08L 69/00, C08K 5/3432, C08L 55/02;**
**C08L 69/00, C08K 5/3435, C08L 55/02**

## Description

[Technical Field]

The present invention relates to a polycarbonate resin composition and more particularly relates to a polycarbonate resin composition that exhibits an excellent light resistance and an excellent resistance to moist heat and is free of the problem of mold staining. The present invention also relates to molded articles from this polycarbonate resin composition.

[Background Art]

Polycarbonate resins are widely used as thermoplastic resins that exhibit an excellent impact resistance, heat resistance, and transparency. Moreover, because they are lighter than inorganic glasses, also support an excellent productivity, and by providing an excellent light resistance, polycarbonate resins can be advantageously used in applications where light resistance is required, for example, the light guide plates, diffusion plates, reflection plates, protective films, and retardation films of liquid crystal display devices, as well as lighting covers, illuminated signs, transmissive screens, and various displays.

The addition of various ultraviolet absorbers is conventionally known as a method for improving the light resistance of polycarbonate resins, and an ultraviolet absorber such as a benzotriazole compound or a triazine compound is typically incorporated (for example, refer to PTL 1 and PTL 2).

However, the light resistance-improving effect with these ultraviolet absorbers is inadequate in the case of polycarbonate resin compositions that contain ABS resin.

[Citation List]

[Patent Literature]

[PTL 1] JP H07-196904 A
[PTL 2] JP 2002-3710 A

Rajan, Vipin & Steinhoff, Bernd & Alig, I. & Wäber, Roy & Wieser, Juergen. (2011). Online Monitoring of the Influence of the Chemical Structure of Hindered Amines on the Hydrolysis of Polycarbonate in a Polycarbonate/Poly(acrylonitrile-butadiene-styrene) Blend by Ultraviolet-Visible Spectroscopy. Journal of Applied Polymer Science - J APPL POLYM SCI. 119. 10.1002/app.32646.

[Summary of Invention]

[Technical Problem]

An object of the present invention is to provide, with respect to polycarbonate resin-rich resin compositions that contain ABS resin, a resin material that exhibits an excellent light resistance.

[Solution to Problem]

As a result of intensive and extensive investigations in order to achieve the aforementioned problem, the present inventors discovered that the incorporation of an N-alkyl hindered amine compound and/or an N-OR hindered amine compound in prescribed proportions in an aromatic polycarbonate resin-rich system that contains ABS resin could provide a polycarbonate resin composition that exhibits a superior light resistance and an excellent resistance to moist heat and that is free of the problem of mold staining. The present invention was achieved based on this discovery.

The present invention relates to the polycarbonate resin composition and molded article described in the following.

[1] A polycarbonate resin composition containing 0.12 to 0.8 mass parts of an N-OR hindered amine compound (C-2), per 100 mass parts of the total of (A) and (B) composed of more than 50 mass parts to not more than 95 mass parts of an aromatic polycarbonate resin (A) and less than 50 mass parts to at least 5 mass parts of an aromatic vinyl-diene-vinyl cyanide copolymer (B)
wherein (B)is an acrylonitrile-butadiene-styrene resin and (C-2) is represented by formula (i)

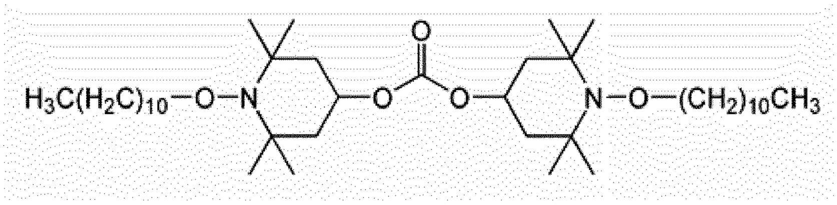

(i).

.

[2] The polycarbonate resin composition according to [1], wherein the content of the N-OR hindered amine compound (C-2) is 0.12 to 0.7 mass parts per 100 mass parts of the total of the aromatic polycarbonate resin (A) and the aromatic vinyl-diene-vinyl cyanide copolymer (B).
[3] The polycarbonate resin composition according to [1] or[2], wherein the content of (B) is not more than 45 mass parts and at least 25 mass parts of the total of (A) and (B).
[4] A molded article comprising the polycarbonate resin composition according to any one of [1]- [3].

[Advantageous Effects of Invention]

The polycarbonate resin composition according to the present invention exhibits an excellent light resistance and resistance to moist heat and is also free of the problem of mold staining.

[Description of Embodiments]

The present invention is described in detail in the following using embodiments and examples, but the present invention is not limited to the embodiments and examples given in the following and can be executed using any of various modifications within a range in which there is no departure from the essential features of the present invention.
The polycarbonate resin composition according to the present invention contains 0.12 to 0.8 mass parts of an N-OR hindered amine compound (C-2), per 100 mass parts for the total of an (A) and (B) composed of more than 50 mass parts to not more than 95 mass parts of an aromatic polycarbonate resin (A) and less than 50 mass parts to at least 5 mass parts of an aromatic vinyl-diene-vinyl cyanide copolymer (B) wherein (B)is an acrylonitrile-butadiene-styrene resin and (C-2) is represented by formula (i)

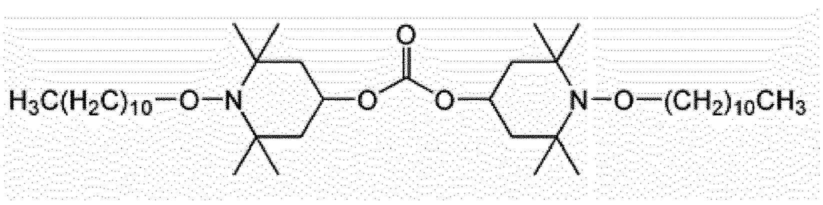

(i).

[Aromatic polycarbonate resin (A)]

There are no limitations on the species of aromatic polycarbonate resin used in the polycarbonate resin composition according to the present invention, and only a single species may be used or two or more species may be used in any combination and any proportions.
The aromatic polycarbonate resin in the present invention is a polymer having the carbonate bond-containing basic structure represented by the following general formula.

[C2]

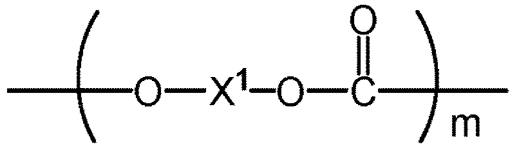

(In the formula, $X^1$ is an aromatic hydrocarbon, and an $X^1$ may be used into which a heteroatom or heterobond has been introduced in order to impart various properties. m represents the number of repeating units.)

An aromatic polycarbonate resin refers to a polycarbonate resin in which each of the carbons directly bonded to the carbonate bond is an aromatic carbon.

There are no limitations on the specific species of aromatic polycarbonate resin, and examples in this regard are aromatic polycarbonate polymers provided by the reaction of a dihydroxy compound and a carbonate precursor. A polyhydroxy compound and so forth may also be reacted here in addition to the dihydroxy compound and carbonate precursor. A method may also be used in which carbon dioxide is reacted as the carbonate precursor with a cyclic ether. The aromatic polycarbonate polymer may be a linear or branched chain. In addition, the aromatic polycarbonate polymer may be a homopolymer composed of a single species of repeating unit or may be a copolymer having two or more species of repeating units. Various copolymerization modes may be selected for such a copolymer, e.g., random copolymer, block copolymer, and so forth. This aromatic polycarbonate polymer is generally a thermoplastic resin.

Among the monomers comprising the starting materials for the aromatic polycarbonate resin, the aromatic dihydroxy compound can be exemplified by the following:

dihydroxybenzenes, such as 1,2-dihydroxybenzene, 1,3-dihydroxybenzene (i.e., resorcinol), and 1,4-dihydroxybenzene;
dihydroxybiphenyls, such as 2,5-dihydroxybiphenyl, 2,2'-dihydroxybiphenyl, and 4,4'-dihydroxybiphenyl;
dihydroxynaphthalenes, such as 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene, and 2,7-dihydroxynaphthalene;
dihydroxydiaryl ethers such as 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy) benzene, and 1,3-bis(4-hydroxyphenoxy)benzene;
bis(hydroxyaryl)alkanes such as 2,2-bis(4-hydroxyphenyl)propane (i.e., bisphenol A), 1,1-bis(4-hydroxyphenyl) propane, 2,2-bis(3-methyl-4-hydroxyphenyl)propane, 2,2-bis(3-methoxy-4-hydroxyphenyl)propane, 2-(4-hydroxyphenyl)-2-(3-methoxy-4-hydroxyphenyl)propane, 1,1-bis(3-tert-butyl-4-hydroxyphenyl)propane, 2,2-bis(4-hydroxy-3,5-dimethylphenyl)propane, 2,2-bis(3-cyclohexyl-4-hydroxyphenyl)propane, 2-(4-hydroxyphenyl)-2-(3-cyclohexyl-4-hydroxyphenyl)propane, $\alpha$, $\alpha$'-bis(4-hydroxyphenyl)-1,4-diisopropylbenzene, 1,3-bis[2-(4-hydroxyphenyl)-2-propyl]benzene, bis(4-hydroxyphenyl)methane, bis(4-hydroxyphenyl)cyclohexylmethane, bis(4-hydroxyphenyl)phenylmethane, bis(4-hydroxyphenyl) (4-propenylphenyl)methane, bis(4-hydroxyphenyl)diphenylmethane, bis(4-hydroxyphenyl)naphthylmethane, 1,1-bis(4-hydroxyphenyl)ethane, 1,2-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 1,1-bis(4-hydroxyphenyl)hexane, 2,2-bis(4-hydroxyphenyl)hexane, 1,1-bis(4-hydroxyphenyl)octane, 2,2-bis(4-hydroxyphenyl)octane, 4,4-bis(4-hydroxyphenyl)heptane, 2,2-bis(4-hydroxyphenyl)nonane, 1,10-bis(4-hydroxyphenyl)decane, and 1,1-bis(4-hydroxyphenyl)dodecane;
bis(hydroxyaryl)cycloalkanes such as 1,1-bis(4-hydroxyphenyl)cyclopentane, 1,1-bis(4-hydroxyphenyl)cyclohexane, 1,4-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-tert-butylcyclohexane, 1,1-bis(4-hydroxyphenyl)-3-phenylcyclohexane, and 1,1-bis(4-hydroxyphenyl)-4-phenylcyclohexane;
cardo structure-containing bisphenols such as 9,9-bis(4-hydroxyphenyl)fluorene and 9,9-bis(4-hydroxy-3-methylphenyl) fluorene;
dihydroxydiaryl sulfides such as 4,4'-dihydroxydiphenyl sulfide and 4,4'-dihydroxy-3,3'-dimethyldiphenyl sulfide;
dihydroxydiaryl sulfoxides such as 4,4'-dihydroxydiphenyl sulfoxide and 4,4'-dihydroxy-3,3'-dimethyldiphenyl sulfoxide; and
dihydroxydiaryl sulfones such as 4,4'-dihydroxydiphenyl sulfone and 4,4'-dihydroxy-3,3'-dimethyldiphenyl sulfone.

Among the preceding, the bis(hydroxyaryl)alkanes are preferred and the bis(4-hydroxyphenyl)alkanes are preferred thereamong, while 2,2-bis(4-hydroxyphenyl)propane (i.e., bisphenol A) is particularly preferred from the

standpoints of the impact resistance and heat resistance.

A single aromatic dihydroxy compound may be used or any combination of two or more in any proportions may be used.

Carbonyl halides, carbonate esters, and so forth are examples of the carbonate precursors among the monomers that are starting materials for aromatic polycarbonate resins. A single carbonate precursor may be used or any combination of two or more in any proportions may be used.

The carbonyl halides can be specifically exemplified by phosgene; and by haloformates such as the bischloroformates of dihydroxy compounds and the monochloroformates of dihydroxy compounds.

The carbonate esters can be specifically exemplified by diaryl carbonates such as diphenyl carbonate and ditolyl carbonate; dialkyl carbonates such as dimethyl carbonate and diethyl carbonate; and carbonates of dihydroxy compounds, such as biscarbonates of dihydroxy compounds, monocarbonates of dihydroxy compounds, and cyclic carbonates.

Method of aromatic polycarbonate resin production

There are no particular limitations on the method of producing the aromatic polycarbonate resin, and any method can be used. Examples thereof are the interfacial polymerization method, melt transesterification method, pyridine method, ring-opening polymerization of a cyclic carbonate compound, and solid-state transesterification of a prepolymer. Those methods that are particularly advantageous among these methods are specifically described in the following.

Interfacial polymerization method

The production of aromatic polycarbonate resin by the interfacial polymerization method will be described first. In the interfacial polymerization method, a dihydroxy compound and a carbonate precursor (preferably phosgene) are reacted in the presence of a reaction-inert organic solvent and an aqueous alkali solution generally while holding the pH at 9 or above, and the aromatic polycarbonate resin is obtained by subsequently carrying out an interfacial polymerization in the presence of a polymerization catalyst. As necessary, the reaction system may contain a molecular weight modifier (terminating agent) and may contain an oxidation inhibitor in order to inhibit oxidation of the dihydroxy compound.

The dihydroxy compound and carbonate precursor are as described above. The use of phosgene is preferred among the carbonate precursors, and the method using phosgene is then known in particular as the phosgene method.

The reaction-inert organic solvent can be exemplified by chlorinated hydrocarbons such as dichloromethane, 1,2-dichloroethane, chloroform, monochlorobenzene, and dichlorobenzene; and by aromatic hydrocarbons such as benzene, toluene, and xylene. A single organic solvent may be used or any combination of two or more organic solvents in any proportions may be used.

The alkali compound in the aqueous alkali solution can be exemplified by alkali metal compounds such as sodium hydroxide, potassium hydroxide, lithium hydroxide, and sodium bicarbonate and by alkaline-earth metal compounds, whereamong sodium hydroxide and potassium hydroxide are preferred. A single alkali compound may be used or any combination of two or more alkali compounds in any proportions may be used.

There are no limitations on the concentration of the alkali compound in the aqueous alkali solution, and generally 5 to 10 mass% is used in order to control the pH in the aqueous alkali solution during the reaction to 10 to 12. In addition, for example, in order to control the pH of the aqueous phase to 10 to 12 and preferably 10 to 11 during phosgene injection, the molar ratio between the bisphenol compound and the alkali compound is generally 1 : at least 1.9 and preferably 1 : at least 2.0 and is generally 1 : not more than 3.2 and preferably 1 : not more than 2.5.

The polymerization catalyst can be exemplified by aliphatic tertiary amines such as trimethylamine, triethylamine, tributylamine, tripropylamine, and trihexylamine; alicyclic tertiary amines such as N,N'-dimethylcyclohexylamine and N,N'-diethylcyclohexylamine; aromatic tertiary amines such as N,N'-dimethylaniline and N,N'-diethylaniline; quaternary ammonium salts such as trimethylbenzylammonium chloride, tetramethylammonium chloride, and triethylbenzylammonium chloride; pyridine; guanine; and guanidine salts. A single polymerization catalyst may be used or any combination of two or more polymerization catalysts in any proportions may be used.

The molecular weight modifier can be exemplified by monohydric aromatic phenols that have a phenolic hydroxyl group; aliphatic alcohols such as methanol and butanol; mercaptan; and phthalimide, among which aromatic phenols are preferred. These aromatic phenols can be specifically exemplified by alkyl group-substituted phenols such as m-methylphenol, p-methylphenol, m-propylphenol, p-propylphenol, p-tert-butylphenol, and p-(long chain alkyl)-substituted phenol; vinyl group-containing phenols such as isopropenylphenol; epoxy group-containing phenols; and carboxyl group-containing phenols such as o-hydroxybenzoic acid and 2-methyl-6-hydroxyphenylacetic acid. A single molecular weight modifier may be used or any combination of two or more molecular weight modifiers in any proportions may be used.

The amount of use of the molecular weight modifier, expressed per 100 moles of the dihydroxy compound, is generally at least 0.5 moles and is preferably at least 1 mole and is generally not more than 50 moles and is preferably not

more than 30 moles. The heat stability and hydrolysis resistance of the polycarbonate resin composition can be enhanced by having the amount of use of the molecular weight modifier be in the indicated range.

The mixing sequence for the reaction substrates, reaction medium, catalyst, additives, and so forth for the reaction may be freely selected as long as the desired aromatic polycarbonate resin is obtained, and the sequence may be freely established as appropriate. For example, when phosgene is used as the carbonate precursor, the molecular weight modifier may be admixed at any time from the reaction between the dihydroxy compound and the phosgene (phosgenation) up to and including the point at which the polymerization reaction is begun.

The reaction temperature is generally 0°C to 40°C, and the reaction time is generally several minutes (for example, 10 minutes) to several hours (for example, 6 hours).

Melt transesterification method

The production of the aromatic polycarbonate resin by the melt transesterification method will now be described. For example, a transesterification reaction between a carbonate diester and a dihydroxy compound is carried out in the melt transesterification method.

The dihydroxy compound is as described above.

The carbonate diester, on the other hand, can be exemplified by dialkyl carbonate compounds such as dimethyl carbonate, diethyl carbonate, and di-tert-butyl carbonate; diphenyl carbonate; and substituted diphenyl carbonates such as ditolyl carbonate. Among these, diphenyl carbonate and substituted diphenyl carbonates are preferred and diphenyl carbonate is particularly preferred. A single carbonate diester may be used or any combination of two or more carbonate diesters in any proportions may be used.

Any ratio between the dihydroxy compound and carbonate diester may be used as long as the desired aromatic polycarbonate resin is obtained, but preferably the carbonate diester is used in at least an equimolar amount per 1 mole of the dihydroxy compound, while the use of at least 1.01 moles per 1 mole of the dihydroxy compound is more preferred. The upper limit is generally not more than 1.30 moles. Using this range makes it possible to adjust the amount of terminal hydroxyl group into a suitable range.

The amount of terminal hydroxyl group in an aromatic polycarbonate resin tends to exercise a major influence on, inter alia, the heat stability, hydrolysis stability, and color. Due to this, as necessary the amount of terminal hydroxyl group may be adjusted by any known method. An aromatic polycarbonate resin having an adjusted amount of terminal hydroxyl group can be obtained in general by adjustment or control of, for example, the mixing ratio between the carbonate diester and the aromatic dihydroxy compound in the transesterification reaction and/or the depth of the vacuum during the transesterification reaction. The molecular weight of the obtained aromatic polycarbonate resin can also generally be adjusted by these processes.

The previously indicated mixing ratio applies when the amount of terminal hydroxyl group is adjusted through adjustment of the mixing ratio between the carbonate diester and dihydroxy compound.

In addition, a separate admixture of the terminating agent may be carried out during the reaction in a more aggressive adjustment method. The terminating agent here can be exemplified by monohydric phenols, monobasic carboxylic acids, and carbonate diesters. A single terminating agent may be used or any combination of two or more terminating agents in any proportions may be used.

A transesterification catalyst is generally used in the production of aromatic polycarbonate resin by the melt transesterification method. Any transesterification catalyst can be used. Among transesterification catalysts, for example, the use of alkali metal compounds and/or alkaline-earth metal compounds is preferred. In combination therewith, for example, a basic compound, such as a basic boron compound, basic phosphorus compound, basic ammonium compound, or an amine compound, may also be used on an auxiliary basis. A single transesterification catalyst may be used or any combination of two or more transesterification catalysts in any proportions may be used.

The reaction temperature in the melt transesterification method is generally 100°C to 320°C. The pressure during the reaction is generally a vacuum of 2 mmHg or below. The specific process may be the execution of a melt polycondensation reaction under the indicated conditions while removing by-products, for example, an aromatic hydroxy compound.

The melt polycondensation reaction can be carried out by a batch method or a continuous method. In the case of the batch method, the mixing sequence for the reaction substrates, reaction medium, catalyst, additives, and so forth may be freely selected as long as the desired aromatic polycarbonate resin is obtained, and the sequence may be freely established as appropriate. The melt polycondensation reaction, however, is preferably carried out using a continuous regime based on a consideration of the stability of the aromatic polycarbonate resin and the polycarbonate resin composition.

A catalyst deactivator may also be used on an optional basis in the melt transesterification method. Any compound that can neutralize the transesterification catalyst can be used as the catalyst deactivator. Examples here are sulfur-containing acidic compounds and their derivatives. A single catalyst deactivator may be used or any

combination of two or more catalyst deactivators in any proportions may be used.

The amount of use of the catalyst deactivator, expressed with reference to the alkali metal or alkaline-earth metal present in the transesterification catalyst, is generally at least 0.5 equivalents and preferably at least 1 equivalent and is generally not more than 10 equivalents and is preferably not more than 5 equivalents. In addition, it is generally at least 1 ppm and generally not more than 100 ppm and preferably not more than 20 ppm, with reference to the aromatic polycarbonate resin.

The molecular weight of the aromatic polycarbonate resin (A) used by the present invention is not particularly limited and may be established by selection as appropriate; however, it is preferably 10,000 to 40,000 as the viscosity-average molecular weight [Mv]. The mechanical strength tends to be unsatisfactory at a viscosity-average molecular weight of less than 10,000, while the flowability and moldability are degraded when the viscosity-average molecular weight exceeds 40,000. The viscosity-average molecular weight is more preferably 16,000 to 40,000, still more preferably 18,000 to 30,000, and particularly preferably 13,500 to 20,500. Known methods can be used, such as control of the amount of the molecular weight modifier as described below, to adjust the molecular weight into the indicated range.

The viscosity-average molecular weight [Mv] here refers to the value calculated using Schnell's viscosity equation, i.e., $\eta = 1.23 \times 10^{-4} Mv^{0.83}$, wherein the intrinsic viscosity [η] (unit: dl/g) at a temperature of 20°C is determined using methylene chloride as the solvent and using a Ubbelohde viscometer. The intrinsic viscosity [η] is the value calculated using the following formula and the specific viscosity [$\eta$sp] measured at each solution concentration [C] (g/dl).

[Math. 1]

$$\eta = \lim_{c \to 0} \eta_{sp} / \mathrm{c}$$

Additional considerations for aromatic polycarbonate resin

The concentration of the terminal hydroxyl groups in the aromatic polycarbonate resin may be freely selected and may be determined by selection as appropriate, but will generally be not more than 1,000 ppm and is preferably not more than 800 ppm and more preferably not more than 600 ppm. This makes it possible to bring about additional improvements in the residence heat stability and color of the polycarbonate resin composition according to the present invention. In addition, the lower limit here, particularly for aromatic polycarbonate resin produced by the melt transesterification method, is generally at least 10 ppm and is preferably at least 30 ppm and more preferably at least 40 ppm. This makes it possible to suppress reductions in the molecular weight and to bring about additional improvements in the mechanical properties of the polycarbonate resin composition according to the present invention.

The unit for the terminal hydroxyl group concentration is the mass of the terminal hydroxyl groups expressed as ppm with reference to the mass of the aromatic polycarbonate resin. The measurement method here is colorimetric determination by the titanium tetrachloride/acetic acid method (the method described in Macromol. Chem., Volume 88, p. 215 (1965)).

The aromatic polycarbonate resin (A) is not limited to embodiments that contain only one aromatic polycarbonate resin, and a mixture of two or more aromatic polycarbonate resins that differ in, for example, monomer composition, molecular weight, terminal hydroxyl group concentration, and so forth, may be used.

Moreover, it may be structured as a copolymer in which polycarbonate resin is the major portion, for example, as a copolymer of an aromatic polycarbonate resin with a siloxane structure-containing oligomer or polymer, with the goal of raising the flame retardancy and impact resistance still further; as a copolymer of an aromatic polycarbonate resin with a phosphorus atom-containing monomer, oligomer, or polymer, with the goal of raising the thermal oxidation stability and flame retardancy still further; as a copolymer of an aromatic polycarbonate resin with a dihydroxyanthraquinone structure-bearing monomer, oligomer, or polymer, with the goal of improving the thermal oxidation stability; as a copolymer of an aromatic polycarbonate resin with an oligomer or polymer having an olefinic structure, such as polystyrene, in order to improve the optical properties; or as a copolymer of an aromatic polycarbonate resin with a polyester resin oligomer or polymer with the goal of enhancing the chemical resistance.

In addition, the polycarbonate resin may contain a polycarbonate oligomer in order to bring about an improved appearance for the molded article and improve the fluidity. The viscosity-average molecular weight [Mv] of this polycarbonate oligomer is generally at least 1,500 and is preferably at least 2,000 and is generally not more than 9,500 and is preferably not more than 9,000. The incorporated polycarbonate oligomer is preferably not more than 30 mass% of the polycarbonate resin (including the polycarbonate oligomer).

Moreover, the aromatic polycarbonate resin need not be only a virgin raw material, but may also be an aromatic

polycarbonate resin that has been regenerated from post-consumer products (what is known as material-recycled aromatic polycarbonate resin). The post-consumer products can be exemplified by optical recording media such as optical disks; light guide plates; transparent vehicle members such as automotive window glass, automotive headlamp lenses, and windshields; containers such as water bottles; eyeglass lenses; and building elements such as soundproof walls, glass windows, and corrugated sheet. Also usable are the pulverizates obtained from, for example, sprues, runners, and rejected or defective product, and pellets obtained by melting such pulverizates.

However, regenerated aromatic polycarbonate resin preferably is not more than 80 mass% and more preferably not more than 50 mass% of the aromatic polycarbonate resin present in the polycarbonate resin composition according to the present invention. Since regenerated aromatic polycarbonate resin has a high potential for deterioration, such as thermal deterioration, ageing deterioration, and so forth, the use of such an aromatic polycarbonate resin in amounts larger than the indicated range creates the possibility of causing a decline in the hue and mechanical properties.

[Aromatic vinyl-diene-vinyl cyanide copolymer (B)]

The copolymer (B) used in the present invention is provided by an aromatic vinyl monomer, a diene, and a vinyl cyanide monomer and optionally additional copolymerizable monomer.

The diene is, for example, butadiene, isoprene, and so forth, and is preferably a diene rubber provided by polymerization in advance, for example, a polybutadiene rubber, acrylonitrile-butadiene copolymer rubber, styrenebutadiene copolymer rubber, polyisoprene rubber, and so forth, and one of these may be used or two or more may be used in combination. The use of polybutadiene rubber and/or styrenebutadiene copolymer rubber is particularly preferred.

The vinyl cyanide monomer can be exemplified by acrylonitrile and methacrylonitrile, with acrylonitrile being particularly preferred.

The aromatic vinyl monomer can be exemplified by styrene, $\alpha$-methylstyrene, p-methylstyrene, p-t-butylstyrene, and vinyltoluene, with styrene and/or $\alpha$-methylstyrene being particularly preferred.

The copolymerization composition ratio is not particularly limited, but 10 to 70 mass parts diene rubber per 100 mass parts of the copolymer is preferred from the standpoint of the molding processability and impact resistance of the resulting resin composition. Similarly, the amount of the vinyl cyanide monomer is preferably 8 to 40 mass parts. The preferred range for the aromatic vinyl monomer is 20 to 80 mass parts.

There are no particular limitations on the method for producing the copolymer, and known methods, such as emulsion polymerization, bulk polymerization, solution polymerization, suspension polymerization, and bulk suspension polymerization, can be used; however, production by emulsion polymerization or bulk polymerization is preferred.

The polycarbonate resin composition according to the present invention is a polycarbonate resin-rich resin composition, and the content of the aromatic vinyl-diene-vinyl cyanide copolymer (B) is less than 50 mass parts and at least 5 mass parts per 100 mass parts of the total of the aromatic polycarbonate resin (A) and the aromatic vinyl-diene-vinyl cyanide copolymer (B). The impact resistance and fluidity of the polycarbonate resin composition according to the present invention can be improved by such an incorporation of the aromatic vinyl-diene-vinyl cyanide copolymer (B). The content of the aromatic vinyl-diene-vinyl cyanide copolymer (B) is preferably not more than 45 mass parts, more preferably not more than 40 mass parts, and still more preferably not more than 35 mass parts, and is preferably at least 10 mass parts, more preferably at least 15 mass parts, still more preferably at least 20 mass parts, and particularly preferably at least 25 mass parts, wherein 10 to 45 mass parts and 10 to 40 mass parts are preferred, 15 to 40 mass parts and 15 to 35 mass parts are more preferred, and 20 to 35 mass parts is still more preferred. In another embodiment, from more than 40 mass parts to less than 50 mass parts is also preferred.

[N-alkyl hindered amine compound (C-1)]

The polycarbonate resin composition according to the present invention may contain an N-alkyl hindered amine compound (C-1). A hindered amine compound is a compound having the piperidine skeleton and in particular is a compound containing 2,2,6,6-tetraalkylpiperidyl wherein the methyl group is particularly preferred for the alkyl group in the tetraalkyl. The N-alkyl hindered amine compound (C-1) is a compound in which the N in the piperidine skeleton is substituted by a possibly substituted alkyl group. The possibly substituted alkyl group substituted on the N in the piperidine skeleton is preferably an alkyl group having 1 to 10 carbons, more preferably an alkyl group having 1 to 4 carbons, and still more preferably an alkyl group having 1 or 2 carbons, wherein, for example, the methyl group, ethyl group, and so forth are preferred and the methyl group is particularly preferred.

Preferred specific examples of the N-alkyl hindered amine compound (C-1) are bis(1,2,2,6,6-pentamethyl-4-piperidyl) [[3,5-bis(1,1-dimethylethyl)-4-hydroxyphenyl]methyl]butylmalonate, bis(1,2,2,6,6-pentamethyl-4-piperidyl) sebacate, and tetrakis(1,2,2,6,6-pentamethyl-4-piperidinyl) butane-1,2,3,4-tetracarboxylate.

Polymer forms, such as poly[(6-morpholino-S-triazin-2,4-diyl) [1,2,2,6,6-pentamethyl-4-piperidyl]imino]-hexamethylene[(2,2,6,6-tetramethyl-4-piperidyl)imino], are also preferred.

Among the preceding, N-alkyl hindered amine compounds further containing a hindered phenol structure in the molecule are preferred for the N-alkyl hindered amine compound (C-1); for example, the bis(1,2,2,6,6-pentamethyl-4-piperidyl) [[3,5-bis(1,1-dimethylethyl)-4-hydroxyphenyl]methyl]butylmalonate given by the following structural formula is particularly preferred.

[C3]

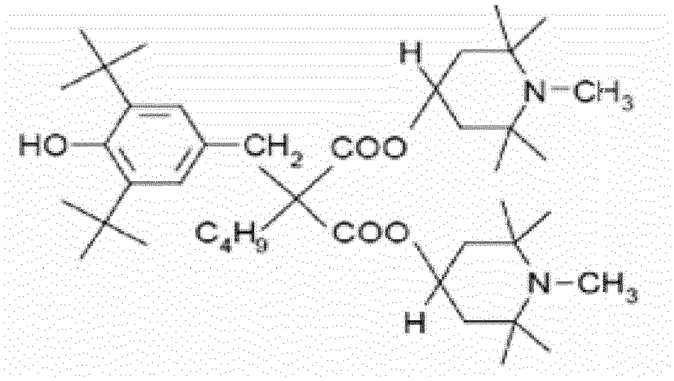

The content of the N-alkyl hindered amine compound (C-1), expressed per 100 mass parts of the total of the aromatic polycarbonate resin (A) and the aromatic vinyl-diene-vinyl cyanide copolymer (B), is 0.12 to 0.8 mass parts and preferably 0.2 to 0.8 mass parts. The light resistance is poor when this content is less than 0.12 mass parts, while the resistance to moist heat and/or the mold staining behavior is poor at more than 0.8 mass parts. The content of the N-alkyl hindered amine compound (C-1) is more preferably at least 0.25 mass parts, more preferably not more than 0.7 mass parts, still more preferably not more than 0.6 mass parts, particularly preferably not more than 0.5 mass parts, and most preferably not more than 0.45 mass parts. Considered in terms of ranges, 0.2 to 0.7 mass parts is preferred and 0.25 to 0.7 mass parts is more preferred, or 0.2 to 0.6 mass parts is preferred and 0.25 to 0.6 mass parts is more preferred. Within the preceding, 0.2 to 0.5 mass parts and especially 0.25 to 0.5 mass parts are preferred, with 0.2 to 0.45 mass parts being particularly preferred and 0.25 to 0.45 mass parts being most preferred.

[N-OR hindered amine compound (C-2)]

The N-OR hindered amine compound (C-2) contained by the polycarbonate resin composition according to the present invention has an N-OR structure, in which an alkyl group (R) is bonded through an oxygen atom (O) to the nitrogen atom (N) present in the piperidine ring skeleton.

Bis(1-undecanoxy-2,2,6,6-tetramethyl-4-piperidinyl) carbonate is a the N-OR hindered amine compound (C-2), and its structural formula is given below.

[C5]

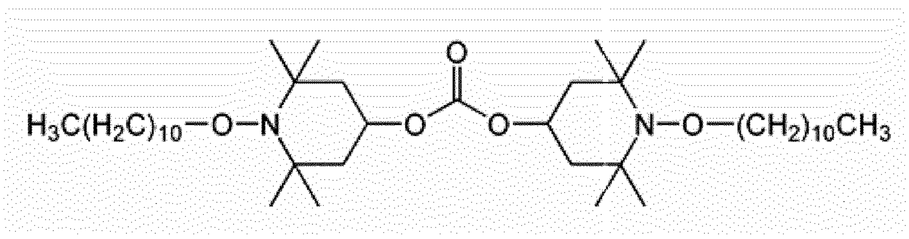

The content of the N-OR hindered amine compound (C-2), expressed per 100 mass parts of the total of the aromatic polycarbonate resin (A) and the aromatic vinyl-diene-vinyl cyanide copolymer (B), is 0.12 to 0.8 mass parts. The light resistance is poor when this content is less than 0.12 mass parts, while the resistance to moist heat and the mold staining behavior are poor at more than 0.8 mass parts. The content is preferably at least 0.15 mass parts and is more preferably at least 0.2 mass parts, and is preferably not more than 0.7 mass parts, more preferably not more than 0.6 mass parts, still more preferably not more than 0.5 mass parts, and particularly preferably not more than 0.45 mass parts. Considered in terms of ranges, 0.15 to 0.7 mass parts is preferred and 0.2 to 0.7 mass parts is more preferred, or 0.15 to 0.6

mass parts is preferred and 0.2 to 0.6 mass parts is more preferred. Within the preceding, 0.15 to 0.5 mass parts and especially 0.2 to 0.5 mass parts are preferred, with 0.15 to 0.45 mass parts or 0.2 to 0.45 mass parts being particularly preferred.

The polycarbonate resin composition according to the present invention may contain both the N-alkyl hindered amine compound (C-1) and the N-OR hindered amine compound (C-2), and the total of both contents in such a case, expressed per 100 mass parts of the total of the aromatic polycarbonate resin (A) and aromatic vinyl-diene-vinyl cyanide copolymer (B), is preferably 0.24 to 1 mass parts, more preferably 0.25 to 0.8 mass parts, and still more preferably 0.25 to 0.5 mass parts.

[Stabilizer]

The polycarbonate resin composition according to the present invention preferably contains a stabilizer, and phosphorus stabilizers and phenolic stabilizers are preferred for the stabilizer.

Any known phosphorus stabilizer can be used as the phosphorus stabilizer. Specific examples are the oxo acids of phosphorus, such as phosphoric acid, phosphonic acid, phosphorous acid, phosphinic acid, and polyphosphoric acid; acidic pyrophosphate metal salts, such as sodium acidic pyrophosphate, potassium acidic pyrophosphate, and calcium acidic pyrophosphate; salts of phosphoric acid with a Group 1 or Group 2B metal, such as potassium phosphate, sodium phosphate, cesium phosphate, and zinc phosphate; organophosphate compounds; organophosphite compounds; and organophosphonite compounds, with organophosphite compounds being particularly preferred.

The organophosphite compounds can be exemplified by triphenyl phosphite, tris(monononylphenyl) phosphite, tris(monononyl-/dinonylphenyl) phosphite, tris(2,4-di-tert-butylphenyl) phosphite, monooctyl diphenyl phosphite, dioctyl monophenyl phosphite, monodecyl diphenyl phosphite, didecyl monophenyl phosphite, tridecyl phosphite, trilauryl phosphite, tristearyl phosphite, and 2,2-methylenebis(4,6-di-tert-butylphenyl) octyl phosphite.

These organophosphite compounds can be specifically exemplified by "ADK STAB 1178", "ADK STAB 2112", and "ADK STAB HP-10" from the ADEKA Corporation; "JP-351", "JP-360", and "JP-3CP" from Johoku Chemical Co., Ltd.; and "Irgafos 168" from BASF SE.

A single phosphorus stabilizer may be incorporated or two or more phosphorus stabilizers may be incorporated in any combination and any proportions.

The content of the phosphorus stabilizer, per 100 mass parts of the total of the polycarbonate resin (A) and the aromatic vinyl-diene-vinyl cyanide copolymer (B), is generally at least 0.001 mass parts and is preferably at least 0.01 mass parts and more preferably at least 0.03 mass parts, and is generally not more than 1 mass parts and preferably not more than 0.7 mass parts and more preferably not more than 0.5 mass parts. The heat stabilizing effect may be unsatisfactory when the phosphorus stabilizer content is less than the lower limit for the indicated range. When the phosphorus stabilizer content exceeds the upper limit for the indicated range, the effect hits a ceiling and this may thus be uneconomical.

The phenolic stabilizer can be exemplified by hindered phenolic oxidation inhibitors. Specific examples thereof are pentaerythritol tetrakis[3-(3,5-di-tert-butyl-4-hydroxyphenyl)propionate], octadecyl 3-(3,5-di-tert-butyl-4-hydroxyphenyl)propionate, thiodiethylenebis[3-(3,5-di-tert-butyl-4-hydrophenyl)propionate], N,N'-hexan-1,6-diylbis[3-(3,5-di-tert-butyl-4-hydroxyphenyl)propionamide], 2,4-dimethyl-6-(1-methylpentadecyl)phenol, diethyl [[3,5-bis(1,1-dimethylethyl)-4-hydroxyphenyl]methyl]phosphoate, 3, 3', 3", 5, 5', 5"-hexa-tert-butyl-a, a', a"- (mesitylen-2, 4, 6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol, and 2-[1-(2-hydroxy-3,5-di-tert-pentylphenyl)ethyl]-4,6-di-tert-pentylphenyl acrylate.

Pentaerythritol tetrakis[3-(3,5-di-tert-butyl-4-hydroxyphenyl)propionate] and octadecyl 3-(3,5-di-tert-butyl-4-hydroxyphenyl)propionate are preferred among the preceding. These phenolic oxidation inhibitors can be specifically exemplified by "Irganox 1010" and "Irganox 1076" from BASF and "ADK STAB AO-50" and "ADK STAB AO-60" from the ADEKA Corporation.

A single phenolic stabilizer may be incorporated or any combination of two or more in any proportions may be incorporated.

The content of the phenolic stabilizer, per 100 mass parts of the total of the polycarbonate resin (A) and the aromatic vinyl-diene-vinyl cyanide copolymer (B), is generally at least 0.001 mass parts and is preferably at least 0.01 mass parts, and is generally not more than 1 mass parts and preferably not more than 0.5 mass parts. The effect as a phenolic stabilizer may be unsatisfactory when the phenolic stabilizer content is less than the lower limit for the indicated range. When the phenolic stabilizer content exceeds the upper limit for the indicated range, the effect hits a ceiling and this may thus be uneconomical.

[Mold-release agent]

The polycarbonate resin composition according to the present invention preferably contains a mold-release agent. The mold-release agent is preferably at least one compound selected from the group consisting of aliphatic carboxylic acids, esters of an alcohol with an aliphatic carboxylic acid, aliphatic hydrocarbon compounds having a number-average molecular weight of 200 to 15,000, and polysiloxane silicone oils.
The aliphatic carboxylic acids can be exemplified by saturated or unsaturated monobasic, dibasic, or tribasic aliphatic carboxylic acids. The aliphatic carboxylic acid here also encompasses alicyclic carboxylic acids. Among these, preferred aliphatic carboxylic acids are monobasic or dibasic carboxylic acids having 6 to 36 carbons, while saturated monobasic aliphatic carboxylic acids having 6 to 36 carbons are more preferred. Specific examples of these aliphatic carboxylic acids are palmitic acid, stearic acid, caproic acid, capric acid, lauric acid, arachidic acid, behenic acid, lignoceric acid, cerotic acid, melissic acid, tetratriacontanoic acid, montanic acid, adipic acid, and azelaic acid.
The same aliphatic carboxylic acids as listed above can be used as the aliphatic carboxylic acid in the aliphatic carboxylic acid/alcohol ester. The alcohol, on the other hand, can be a saturated or unsaturated monohydric or polyhydric alcohol. This alcohol may bear a substituent such as a fluorine atom or aryl group. Monohydric or polyhydric saturated alcohols having not more than 30 carbons are preferred among the preceding, with saturated aliphatic monohydric alcohols and polyhydric alcohols having not more than 30 carbons being more preferred. Here, aliphatic also encompasses alicyclic compounds. Specific examples of the subject alcohols are octanol, decanol, dodecanol, stearyl alcohol, behenyl alcohol, ethylene glycol, diethylene glycol, glycerol, pentaerythritol, 2,2-dihydroxyperfluoropropanol, neopentyl glycol, ditrimethylolpropane, and dipentaerythritol.
Specific examples of the aliphatic carboxylic acid/alcohol esters are beeswax (a mixture in which melissyl palmitate is the main component), stearyl stearate, behenyl behenate, stearyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate, and pentaerythritol tetrastearate.
The aliphatic hydrocarbon having a number-average molecular weight of 200 to 15,000 can be exemplified by liquid paraffins, paraffin waxes, microwaxes, polyethylene waxes, Fischer-Tropsch waxes, and oligomers of $\alpha$-olefins having 3 to 12 carbons. This aliphatic hydrocarbon also encompasses alicyclic hydrocarbons. These hydrocarbon compounds may be partially oxidized. Among the preceding, paraffin waxes, polyethylene waxes, and partial oxidation products of polyethylene waxes are preferred, with paraffin waxes and polyethylene waxes being more preferred. The number-average molecular weight is preferably 200 to 5,000. This aliphatic hydrocarbon may be a single substance or, as long as the main component is in the range indicated above, may be a mixture of aliphatic hydrocarbons having different constituent components and/or molecular weights.
The polysiloxane silicone oil can be exemplified by dimethylsilicone oil, phenylmethylsilicone oil, diphenylsilicone oil, fluoroalkylsilicone, and so forth. Two or more of these may also be used in combination.
When a mold-release agent is used, it is used generally at 0.05 to 2 mass parts and preferably 0.1 to 1 mass parts per 100 mass parts of the total of the polycarbonate resin (A) and the aromatic vinyl-diene-vinyl cyanide copolymer (B). A satisfactory mold-release improving effect can be obtained when the mold-release agent content is at least the indicated lower limit, while problems caused by an excessive incorporation of the mold-release agent, e.g., mold staining during injection molding and a reduced hydrolysis resistance, can be prevented when the indicated upper limit is not exceeded.

[Core/shell elastomer]

The polycarbonate resin composition according to the present invention may contain a core/shell elastomer.
The core/shell elastomer is preferably a core/shell graft copolymer type. An example in this regard is a core/shell graft copolymer in which the core layer is at least one rubber component selected from diene rubbers such as polybutadiene, polybutyl acrylate rubbers, polyorganosiloxane rubbers, and IPN composite rubbers composed of polyorganosiloxane rubber and polyalkyl acrylate rubber, and in which the shell layer is formed by the copolymerization of a (meth)acrylate ester on the circumference of the core layer.
Among the preceding, the use is preferred of a graft copolymer elastomer in which the core layer is a diene rubber polymer and the shell layer is provided by the graft copolymerization thereon of a (meth)acrylate ester compound. The method for producing the graft copolymer may be any production method, such as bulk polymerization, solution polymerization, suspension polymerization, emulsion polymerization, and so forth.
The diene rubber of the core layer can be exemplified by butadiene rubbers, such as polybutadiene, (partially) hydrogenated polybutadiene, and copolymers between butadiene and at least one vinyl monomer copolymerizable with butadiene, such as butadiene-styrene copolymers, (partially) hydrogenated polybutadiene-styrene copolymers, butadiene-styrene block copolymers, (partially) hydrogenated polybutadiene-styrene block copolymers, butadiene-acrylonitrile copolymers, and acrylic rubber copolymers in which butadiene-isobutyl acrylate is the main component, and by isobutylene rubbers such as polyisobutylene, polyisobutylene-styrene copolymers, and polyisobutylene-styrene block

copolymers. Butadiene rubbers are preferred among the preceding.

In particular, the butadiene rubbers are preferably butadiene-styrene copolymers, butadiene-styrene block copolymers, and polybutadienes provided by the copolymerization of 95 to 100 mass% 1,3-butadiene with 0 to 5 mass% of at least one vinyl monomer copolymerizable with 1,3-butadiene, with polybutadiene from substantially 100 mass% 1,3-butadiene being particularly preferred. While substantially 100 mass% polybutadiene indicates a rubber composed of only butadiene, trace amounts of other components may be incorporated for the purpose of raising the heat stability of the rubbery polymer and/or facilitating control of the particle diameter. In such a case, however, the other components are generally not more than 5 mass% in the butadiene rubber and are preferably not more than 3 mass% and more preferably not more than 1 mass%.

The (meth)acrylate ester compound that is graft polymerized on the diene rubber can be exemplified by alkyl methacrylate esters, such as methyl methacrylate, ethyl methacrylate, and n-butyl methacrylate;

aryl methacrylates, such as phenyl methacrylate and naphthyl methacrylate; and
glycidyl group-containing methacrylates, such as glycidyl acrylate and glycidyl methacrylate. From the standpoint of the balance between the heat resistance and the polycarbonate resin, alkyl methacrylate esters are preferred among the preceding and methyl methacrylate is more preferred.

A single one of these (meth)acrylate ester compounds may be used or two or more may be used.

As desired, vinyl monomer other than the aforementioned (meth)acrylate ester compounds may also be incorporated. This other vinyl monomer can be exemplified by the following:

aromatic vinyls such as styrene and $\alpha$-methylstyrene;
unsaturated nitriles such as acrylonitrile and methacrylonitrile;
vinyl ethers such as methyl vinyl ether and butyl vinyl ether;
maleimide compounds such as maleimide, N-methylmaleimide, and N-phenylmaleimide; and
$\alpha$, $\beta$-unsaturated carboxylic acid compounds, such as maleic acid, phthalic acid, and itaconic acid, and their anhydrides (for example, maleic anhydride).

In addition, a crosslinking monomer may also be co-used, e.g., an aromatic multifunctional vinyl compound such as divinylbenzene and divinyltoluene;

an unsaturated carboxylic acid ester of a polyhydric alcohol, such as ethylene glycol dimethacrylate, 1,3-butanediol diacrylate, trimethylolethane triacrylate, trimethylolpropane trimethacrylate, and pentaerythritol tetramethacrylate;
allyl esters of unsaturated carboxylic acids, such as allyl acrylate and allyl methacrylate; and
diallyl compounds and triallyl compounds such as diallyl phthalate, diallyl sebacate, and triallyltriazine.

The content of the diene rubber in such a preferred core/shell elastomer is preferably 50 to 95 mass%, more preferably 70 to 90 mass%, and still more preferably 75 to 85 mass%, in 100 mass% used for the total of the diene rubber, (meth)acrylate ester compound, other monomer, and crosslinking monomer.

The (meth)acrylate ester compound that is graft polymerized to the diene rubber is preferably 50 to 100 mass%, more preferably 75 to 100 mass%, still more preferably 90 to 100 mass%, and particularly preferably is substantially 100 mass%, in 100 mass% used for the total of the (meth)acrylate ester compound, other monomer, and crosslinking monomer.

There are no particular limitations on the method for producing the graft copolymer in the core/shell elastomer, and the production method may be any of bulk polymerization, solution polymerization, suspension polymerization, emulsion polymerization, and so forth, and the copolymerization regime may be single-stage grafting or multistage grafting. However, viewed from the standpoints of the productivity and facilitating control of the particle diameter, emulsion polymerization is preferred and a multistage emulsion polymerization is more preferred. This multistage emulsion polymerization method can be exemplified by the polymerization method described in JP 2003-261629 A.

The average particle diameter of the core/shell elastomer is preferably 160 to 240 nm. When the average particle diameter is below the indicated lower limit, the impact resistance of the polycarbonate resin composition according to the present invention is prone to be unsatisfactory. When the average particle diameter exceeds the indicated upper limit, the flame retardancy and fire protection behavior of the polycarbonate resin composition according to the present invention readily decline; the impact resistance with high-temperature molding also declines; and the initial hue is also prone to deteriorate. The average particle diameter is more preferably 170 to 220 nm and is even more preferably 180 to 210 nm.

The average particle diameter is determined as the volume-average particle diameter D50 as measured by dynamic light scattering on the graft copolymer solution after completion of the polymerization. For example, a "Microtrac Particle Size Analyzer 9230UPA" from Nikkiso Co., Ltd. can be used for the measurement.

This core/shell elastomer can be exemplified by the following: "Paraloid (registered trademark, also applies to the following) EXL 2602", "Paraloid EXL 2603", "Paraloid EXL 2655", "Paraloid EXL 2311", "Paraloid EXL 2313", "Paraloid EXL 2315", "Paraloid KM 330", "Paraloid KM 336P", and "Paraloid KCZ 201", all from Rohm and Haas Japan KK; "Metablen (registered trademark, also applies to the following) C-223A" "Metablen E-901", "Metablen E-875A", "Metablen S-2001", and "Metablen SRK-200", all from Mitsubishi Rayon Co., Ltd.; and "Kane Ace (registered trademark, also applies to the following) M511", "Kane Ace M711", "Kane Ace M732", "Kane Ace M600", "Kane Ace M400" "Kane Ace M580", and "Kane Ace MR-01", all from the Kaneka Corporation.

The content of the core/shell elastomer, per 100 mass parts of the polycarbonate resin (A), is preferably 1 to 20 mass parts, more preferably at least 2 mass parts, and still more preferably at least 3 mass parts, and is more preferably not more than 15 mass parts. The impact resistance of the polycarbonate resin composition according to the present invention is inadequate when the content of the core/shell elastomer is lower than the lower limit for the indicated range, while a decline in the flame retardancy, impact resistance, color, and moist heat resistance tends to occur when the content exceeds the upper limit for the indicated range.

[Colorant (dye/pigment)]

The polycarbonate resin composition according to the present invention preferably also contains a colorant (dye/pigment). The colorant (dye/pigment) can be exemplified by inorganic pigments, organic pigments, and organic dyes.

The inorganic pigments can be exemplified by carbon black; sulfide pigments such as cadmium red and cadmium yellow; silicate pigments such as ultramarine; oxide pigments such as zinc white, iron oxide red, chromium oxide, titanium oxide, iron black, titanium yellow, zinc-iron brown, titanium-cobalt green, cobalt green, cobalt blue, copper-chromium black, and copper-iron black; chromic acid pigments such as chrome yellow and molybdenum orange; and ferrocene pigments such as Prussian blue.

The organic pigments and organic dyes can be exemplified by phthalocyanine dyes and pigments such as copper phthalocyanine blue and copper phthalocyanine green; azo dyes and pigments such as nickel azo yellow; condensed polycyclic dyes and pigments such as the thioindigo system, perinone system, perylene system, quinacridone system, dioxazine system, isoindolinone system, and quinophthalone system; the anthraquinone system; heterocyclics; and methyl systems. Two or more of these may be used in combination.

Among the preceding, carbon black, titanium oxide, cyanine compounds, quinoline compounds, anthraquinone compounds, and phthalocyanine compounds are preferred.

When a colorant (dye/pigment) is incorporated, the colorant (dye/pigment) content, per 100 mass parts of the total of the polycarbonate resin (A) and the aromatic vinyl-diene-vinyl cyanide copolymer (B), is generally not more than 5 mass parts and is preferably not more than 3 mass parts and more preferably not more than 2 mass parts. The impact resistance can be unsatisfactory when the colorant (dye/pigment) content exceeds 5 mass parts.

The following, for example, may be incorporated within a range in which the performance is not impaired: a flame retardant other than the preceding, an anti-dripping agent, an ultraviolet absorber, a static inhibitor, a lubricant, an antiblocking agent, a flowability improver, a plasticizer, a dispersing agent, a diffusing agent, an antibacterial, and so forth.

[Method for producing polycarbonate resin composition]

There are no limitations on the method for producing the polycarbonate resin composition according to the present invention, and the known methods for producing polycarbonate resin compositions can be broadly used.

The method can be specifically exemplified by the following: the aromatic polycarbonate resin (A), the aromatic vinyl-diene-vinyl cyanide copolymer (B), and the N-OR hindered amine compound (C-2), and the other components that are incorporated on an optional basis are preliminarily blended using any of various mixers, such as a tumbler or Henschel mixer, followed by melt-kneading using a mixer such as a Banbury mixer, roll, Brabender, single-screw kneading extruder, twin-screw kneading extruder, kneader, and so forth.

The polycarbonate resin composition according to the present invention may also be produced, for example, without preliminarily blending the individual components, or with a preliminary blending of only a portion of the components, and carrying out melt-kneading while feeding the extruder using a feeder.

For example, a portion of the components may be preliminarily blended, supplied to an extruder, and melt-kneaded to provide a resin composition used as a master-batch. This master-batch is again blended with the remainder of the components followed by melt-kneading to produce the polycarbonate resin composition according to the present invention.

When a hard-to-disperse component is to be blended, the dispersity can also be enhanced by preliminarily dissolving or dispersing this hard-to-disperse component in a solvent, such as water, an organic solvent, and so forth, and carrying out kneading using the resulting solution or dispersion.

[Molded article]

The polycarbonate resin composition according to the present invention is generally used in the form of a molded article (resin composition molded article) provided by molding into a freely selected shape. There are no limitations on the shape, pattern, color, dimensions, and so forth of this molded article, and these may be freely established in conformity with the application for the molded article.

Specific examples of the molded article are parts and components for electrical and electronic equipment, office automation equipment, mobile data terminal equipment, machine parts, household appliances, vehicle parts, building members, various containers, leisure goods, miscellaneous goods, lighting equipment, and so forth. Among these, use for parts and components for vehicle parts, electrical and electronic equipment, office automation equipment, mobile data terminal equipment, household appliances, lighting equipment, and so forth is particularly preferred, with application to the following being particularly advantageous: automotive interior trim components such as the blades and fins for air conditioner outlets, switches, levers, handles, front panels, center clusters, consoles, door finishers, cup holders, automotive camera casings, and so forth, and exterior trim components such as fenders, side sills, bumpers, side spoilers, front grills, rear garnish, outer door handles, pillar covers, door mirror bodies, mat guards, splash boards, cowl panels, wheel covers, lamp housings, and so forth.

There are no particular limitations on the method for producing the molded article, and any of the molding methods commonly used with polycarbonate resin compositions can be employed. Examples here are injection molding methods, ultrahigh speed injection molding methods, injection compression molding methods, two-color molding methods, hollow molding methods such as gas-assisted molding, molding methods using insulated molds, molding methods using rapidly heated molds, foam molding (also including supercritical fluids), insert molding, IMC (in-mold coating molding) molding methods, extrusion molding methods, sheet molding methods, thermoforming methods, rotational molding methods, laminate molding methods, press molding methods, and so forth. Molding methods that use a hot runner system may also be used.

The polycarbonate resin composition according to the present invention can produce molded articles free of the problem of mold staining, and the thereby obtained molded articles can be used as practical molded articles that exhibit an excellent light resistance and moist heat resistance.

[Examples]

The present invention is more specifically described in the following using examples. However, the present invention is not limited to or by the examples given in the following and can be executed using any modification or alteration within a range in which there is no departure from the essential features of the present invention.

The materials used in the examples and comparative examples are given in the following Tables 1 and 2.

[Table 1]

| component | symbol | |
|---|---|---|
| aromatic polycarbonate resin (A) | A1 | bisphenol A-type aromatic polycarbonate resin<br>product name: Iupilon (registered trademark) S-3000 from Mitsubishi Engineering-Plastics Corporation<br>viscosity-average molecular weight Mv: 22,000 |
| | A2 | bisphenol A-type aromatic polycarbonate resin<br>product name: Iupilon (registered trademark) H-4000 from Mitsubishi Engineering-Plastics Corporation<br>viscosity-average molecular weight Mv: 16,000 |
| | A3 | bisphenol A-type aromatic polycarbonate resin<br>MFR (300°C, 1.2kg): 23g/10 min |

(continued)

| component | symbol | |
|---|---|---|
| ABS resin (B) | B1 | ABS resin provided by emulsion polymerization<br>MFR (220°C,10kg): 53g/10 min<br>product name:Kralastic SXH-330 from Nippon A&L Inc. |
| | B2 | ABS resin provided by bulk polymerization<br>MFR (220°C,10kg): 35g/10 min<br>product name:Santac UT-61 from Nippon A&L Inc. |
| | B3 | ABS resin provided by bulk polymerization<br>product name:Santac AT-05 from Nippon A&L Inc. |
| | B4 | ABS resin provided by emulsion polymerization<br>product name:Starex CHT from Lotte Advanced Materials Co. |
| N-alkyl hindered amine (C-1) | C-1-1 | bis(1,2,2,6,6-pentamethyl-4-piperidyl)<br>[[3,5-bis(1,1-dimethylethyl -4-hydroxyphenyl]methyl]butylmalonate<br>product name: Tinuvin PA144 from BASF |
| | C-1-2 | bis(1,2,2,6,6-pentamethyl-4-piperidyl)sebacate<br>product name: Tinuvin 765 from BASF |
| | C-1-3 | tetrakis(1,2,2,6,6-pentamethyl-4-piperidinyl)<br>butane-1,2,3,4-tetracarboxylate<br>product name:LA-52 from ADEKA Corporation |
| | C-1-4 | poly[(6-morpholino-S-triazin-2,4-diyl)<br>((1,2,2,6,6-pentamethyl-4-p-peridyl)imino)-hexamethylene-((1,2,2,6,6-pentamethyl-4-p-peridyl)imino)]<br>product name:CYASORB UV-3529 from Cytec Industries |
| N-OR hindered amine (C-2) | C-2-1 | bis(1-undecanoxy-2,2,6,6-tetramethyl-4-piperidinyl) carbonate<br>product number:LA-81 from ADEKA Corporation |
| | C-2-2 | polymeric N-OR hindered amine<br>molecular weight:2800 to 4000 g/mol<br>Tinuvin NOR371 from BASF |

(continued)

| component | symbol | |
|---|---|---|
| light stabilizer other than(C) (X) | X1 | benzotriazole UV absorber<br>2-(2'-hydroxy-5'-tert-octylphenyl)benzotriazole<br>product name:SB709 from Shipro Kasei Kaisha |
| | X2 | triazine UV absorber<br>product name: Tinuvin 1577 from BASF |
| | X3 | N-H hindered amine<br>bia(2,2,6,6-tetramethyl-4-piperidyl) sebacate<br>product name: Tinuvin 770 from BASF |
| | X4 | N-H hindered amine<br>tetrakis(2,2,6,6-tetramethyl-4-piperidinyl)<br>butane-1,2,3,4-tetracarboxylate<br>product name:LA-57 from ADEXA Corporation |
| | X5 | N-H polymeric hindered amine<br>poly[(6-morpholino-S-triazin-2,4-diyl)<br>((2,2,6,6-tetramethyl-4-piperidyl)imino)-hexamethylene-((2,2,6,6-tetramethyl-4-piperidyl)imino)]<br>product name:CYASORB UV-3346 from Cytec Industries |
| | X6 | N-H polymeric hindered amine<br>poly[[6-(1,1,3,3-tetramethy-butyl)amino-1,3,5-triazin-2,4-diyl]<br>[(2,2,6,6-tetramethyl-4-piperidinyl)imino]-1,6-hexanediyl [(2,2,6,6-tetramethyl-4-piperidinyl)imino]]<br>product name:KEMISTAB 94 from Chemipro Kasei Kaisha |
| | X7 | benzotriazole UV absorber<br>2-(2'-hydroxy-5'-tert-metylphenyl)benzotriazole<br>product name: Tinuvin P from BASF |

[Table 2]

| component | symbol | |
|---|---|---|
| core/shell elastomer | EL1 | MBS resin<br>product name:Kane Ace M511 from Kaneka Corporation |
| | EL2 | MBS resin<br>product name:Kane Ace M732 from Kaneka Corporation |

(continued)

| component | symbol | |
|---|---|---|
| stabilizer (S) | S1 | phosphorus heat stabilizer<br>tris(2,4-di-t-butylphenyl) phosphite<br>product name:ADK STAB 2112 from ADEKA Corporation |
| | S2 | phenolic oxidation inhibitor<br>pentaerythritol tetrakis[3-(3,5-di-t-butyl-4-hydroxyphenyl)propionate]<br>product name:Irganox 1010 from BASF Japan |
| | S3 | phosphorus stabilizer<br>mixture of monostearyl acid phosphate and distearyl acid phosphate<br>product name:ADK STAB AX-71 from ADEKA Corporation |
| | S4 | benzoate stabilizer<br>hexadecyl 3,5-di-t-butyl-4-hydroxybenzoate<br>product name:KEMISORB 114 from Chemipro Kasei |
| | S5 | phenolic oxidation inhibitor<br>octadecyl 3-(3,5-di-tert-butyl-4-hydroxyethylphenyl)propionate<br>product name:ADEKA STAB AO-50 from ADEKA Corporation |
| mold-release agent (R) | R1 | stearyl stearate<br>product name:Unister M-9676 from NOF Corporation |
| | R2 | pentaerythritol tetrastearate<br>product name:Loxiol VPG861 from Emery Oleochemicals Japan |
| carbon black | CB | masterbatch of 40mass% carbon black and 60mass% polystyrene resin<br>product name:Royal Black 948G from ECCA Co |
| titanium oxide | TiO2 | titanium oxide<br>product name:KRONOS 2233 from KRONOS Worldwide, Inc. |
| colorant | PIG1 | CI No.: Pigment Red 265<br>CAS No.: 12041-93-6 |
| | PIG2 | CI No.: Pigment Black 28<br>CAS No.: 68186-91-4 |
| | PIG3 | CI No.: Pigment Brown 24<br>CAS No.: 68186-90-3 |

(Examples 20 to 34 and Comparative Examples)

The components shown in Tables 1 and 2 were blended in the proportions (mass parts in all instances) given in the following Tables 3 to 8; mixing was carried out for 20 minutes using a tumbler; this was followed by feed to a twin-screw extruder (TEM26SX, Toshiba Machine Co., Ltd.) equipped with one vent; kneading was performed using conditions of a screw rotation rate of 250 rpm, an ejection rate of 30 kg/hour, and a barrel temperature of 260°C; the extruded molten resin composition strand was quenched in a water tank; and pelletizing was carried out using a pelletizer to yield pellets of the polycarbonate resin composition.

[Evaluation of light resistance]

The pellets yielded by the aforementioned production method were then dried for 5 hours at 100°C, followed by injection molding using an SE50DUZ injection molder from Sumitomo Heavy Industries, Ltd., a cylinder temperature of 260°C, a GR-503 (20 $\mu$m) textured mold, and a mold temperature of 70°C to mold a textured plate (60 mm × 60 mm × 2 mm thickness) .

Using a xenon weathering test instrument, a light resistance treatment was carried out on the textured plate using the conditions indicated below; the color before and after the light resistance treatment was measured; and the color difference $\Delta$E was compared.

Light resistance test conditions

instrument used: Ci4000 Weather-Ometer, Atlas
filter/inner: quartz
filter/outer: soda lime
black panel temperature: 89°C
irradiance: 100 $W/m^2$ (300 to 400 nm)
cumulative irradiation: 50 $MJ/m^2$
no spray
humidity: 50%

The color was measured using an SE6000 spectral color difference meter from Nippon Denshoku Industries Co., Ltd., set to reflection method, D65 light source, and 10° field of vision, and the measurement was performed at the center of the textured plate provided by the method described above.

[Evaluation of moist heat resistance]

The moist heat resistance was evaluated by comparison of the MFR before a moist heat treatment with the MFR after the moist heat treatment.

Thus, the pellets provided by the production method described above were subjected to a moist heat treatment for 180 hours in an environment with a temperature of 80°C and a relative humidity of 95%. The MFR (260°C cylinder temperature, 2.16 kg load) was measured (unit: g/10 min) before the moist heat treatment and after the moist heat treatment.

[Evaluation of mold deposits]

Using a drop-shaped mold and an SE7M injection molder from Sumitomo Heavy Industries, Ltd., the obtained pellets were molded for 100 continuous shots at a molding temperature of 260°C and a mold temperature of 60°C. After completion, the presence/absence of deposits in the mold was inspected and evaluation was performed using the following criteria.

A: There are few deposits in the mold.
B: A moderate number of deposits are seen in the mold.
C: There are numerous deposits in the mold.

The results of these evaluation are given in the following Tables 3 to 8.

[Table 3]

| | | Comparative Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| polycarbonate resin (A) | A1 | 49 | 49 | 49 | 49 | 49 | 49 | 49 | 49 | 49 | 49 | 49 |
| | A2 | 21 | 21 | 21 | 21 | 21 | 21 | 21 | 21 | 21 | 21 | 21 |
| ABS resin (B) | B1 | 30 | | 30 | | 30 | 30 | 30 | 30 | 30 | 30 | |
| | B2 | | 30 | | 30 | | | | | | | 30 |
| N-alkyl hindered amine (C-1) | C-1-1 | 0,3 | 0,3 | | | | | | | | | |
| | C-1-2 | | | 0,3 | 0,3 | 0,5 | 0,3 | | | | | |
| | C-1-3 | | | | | | | 0,3 | 0,3 | 0,3 | | 0,3 |
| | C-1-4 | | | | | | | | | | 0,3 | |

(continued)

| | | Comparative Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| light stabilizer other than (C-1) (X) | X1 | | | | | | 0,3 | | | | | |
| | X2 | | | | | | | | | | | |
| | X3 | | | | | | | | | | | |
| | X4 | | | | | | | | | | | |
| | X5 | | | | | | | | | | | |
| | X6 | | | | | | | | | | | |
| stabilizer (S) | S1 | 0,03 | 0,03 | 0,03 | 0,03 | 0,03 | 0,03 | 0,03 | 0,03 | 0,03 | 0,03 | 0,03 |
| | S2 | 0,05 | 0,05 | 0,05 | 0,05 | 0,05 | 0,05 | 0,05 | | 0,05 | 0,05 | 0,05 |
| | S3 | | 0,01 | | 0,01 | | | | | | | 0,01 |
| | S4 | | | | | | | | 0,3 | 0,3 | | |
| mold-release agent (R) | R1 | 0,1 | 0,1 | 0,1 | 0,1 | 0,1 | 0,1 | 0,1 | 0,1 | 0,1 | 0,1 | 0,1 |
| | R2 | 0,1 | 0,1 | 0,1 | 0,1 | 0,1 | 0,1 | 0,1 | 0,1 | 0,1 | 0,1 | 0,1 |
| carbon black | CB | 0,5 | 0,5 | 0,5 | 0,5 | 0,5 | 0,5 | 0,5 | 0,5 | 0,5 | 0,5 | 0,5 |
| light resistance AE (50MJ cumulative irradiation) | OMJ | 0,00 | 0,00 | 0,00 | 0,00 | 0,00 | 0,00 | 0,00 | 0,00 | 0,00 | 0,00 | 0,00 |
| | 50MJ | 1,24 | 1,04 | 1,32 | 1,13 | 1,09 | 1,33 | 0,63 | 0,80 | 0,54 | 1,27 | 1,00 |
| moist heat resistance (180hr moist heat treatment) | 0hr | 17 | 16 | 17 | 16 | 19 | 18 | 17 | 16 | 17 | 16 | 15 |
| | 180hr | 25 | 20 | 34 | 29 | 52 | 35 | 35 | 47 | 48 | 34 | 35 |
| mold deposits | | A | A | A | A | B | A | A | A | A | A | A |

[Table 4]

| | | Comparative examples | | | | | | | |
|---|---|---|---|---|---|---|---|---|---|
| | | 12 | 13 | 14 | 15 | 16 | 17 | 18 | 19 |
| polycarbonate resin (A) | A1 | 49 | 49 | 49 | 49 | 60 | 60 | 60 | 60 |
| | A2 | 21 | 21 | 21 | 21 | 20 | 20 | | |
| ABS resin (B) | B1 | 30 | | 30 | 30 | 20 | | 40 | |
| | B2 | | 30 | | | | 20 | | 40 |
| N-alkyl hindered amine (C-1) | C-1-1 | 0,5 | 0,5 | 0,3 | 0,3 | 0,3 | 0,3 | 0,3 | 0,3 |
| | C-1-2 | | | 0,1 | | | | | |
| | C-1-3 | | | | 0,1 | | | | |
| | C-1-4 | | | | | | | | |
| light stabilizer other than (C-1) (X) | X1 | | | | | | | | |
| | X2 | | | | | | | | |
| | X3 | | | | | | | | |
| | X4 | | | | | | | | |
| | X5 | | | | | | | | |
| | X6 | | | | | | | | |

(continued)

| | | Comparative examples | | | | | | | |
|---|---|---|---|---|---|---|---|---|---|
| | | 12 | 13 | 14 | 15 | 16 | 17 | 18 | 19 |
| stabilizer (S) | S1 | 0,03 | 0,03 | 0,03 | 0,03 | 0,03 | 0,03 | 0,03 | 0,03 |
| | S2 | 0,05 | 0, 05 | 0,05 | 0,05 | 0,05 | 0,05 | 0,05 | 0,05 |
| | S3 | | 0,01 | | | | 0,01 | | 0,01 |
| | S4 | | | | | | | | |
| mold-release agent (R) | R1 | 0,1 | 0,1 | 0,1 | 0,1 | 0,1 | 0,1 | 0,1 | 0,1 |
| | R2 | 0,1 | 0,1 | 0,1 | 0,1 | 0,1 | 0,1 | 0,1 | 0,1 |
| carbon black | CB | 0,5 | 0,5 | 0,5 | 0,5 | 0,5 | 0,5 | 0,5 | 0,5 |
| light resistance ΔE (50HJ cumulative | 0MJ | 0,00 | 0,00 | 0,00 | 0,00 | 0,00 | 0,00 | 0,00 | 0,00 |
| | 50MJ | 0,78 | 0,71 | 1,02 | 1,11 | 1,46 | 1,23 | 1,01 | 0,91 |
| moist heat resistance (180hr moist heat treatment) | 0hr | 18 | 17 | 18 | 17 | 14 | 14 | 19 | 19 |
| | 180hr | 28 | 22 | 29 | 30 | 23 | 19 | 28 | 24 |
| mold deposits | | A | A | A | A | A | A | B | A |

[Table 5]

| | | comparative examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| polycarbonate resin (A) | A1 | 49 | 49 | 49 | 49 | 49 | 49 | 49 | 49 | 49 | 49 | 49 |
| | A2 | 21 | 21 | 21 | 21 | 21 | 21 | 21 | 21 | 21 | 21 | 21 |
| ABS resin (B) | B1 | 30 | 30 | 30 | 3C | 30 | 30 | 30 | 30 | 30 | 30 | 30 |
| | B2 | | | | | | | | | | | |
| N-alkyl hindered amine (C-1) | C-1-1 | | | | | | | | | | | |
| | C-1-2 | | | | 0.05 | | | | | | | |
| | C-1-3 | | | | | | | 0.1 | 1 | | | |
| | C-1-4 | | | | | | | | | | | |
| light stabilizer other than (C-1) (X) | X1 | | 0.3 | | | | | | | | | |
| | X2 | | | 0.3 | | | | | | | | |
| | X3 | | | | | 0.3 | 0.5 | | | | | |
| | X4 | | | | | | | | | 0.3 | | |
| | X5 | | | | | | | | | | 0.3 | |
| | X6 | | | | | | | | | | | 0.3 |
| stabilizer (S) | S1 | 0.03 | 0.03 | 0.03 | 0.03 | 0.03 | 0.03 | 0.03 | 0.03 | 0.03 | 0.03 | 0.03 |
| | S2 | 0.05 | 0.05 | 0.05 | 0.05 | 0.05 | 0.05 | 0.05 | 0.05 | 0.05 | 0.05 | 0.05 |
| | S3 | | | | | | | | | | | |
| mold-release agent (R) | R1 | 0.1 | 0.1 | 0.1 | 0.1 | 0.1 | 0.1 | 0.1 | 0.1 | 0.1 | 0.1 | 0.1 |
| | R2 | 0.1 | 0.1 | 0.1 | 0.1 | 0.1 | 0.1 | 0.1 | 0.1 | 0.1 | 0.1 | 0.1 |
| carbon black | CB | 0.5 | 0.5 | 0.5 | 0.5 | 0.5 | 0.5 | 0.5 | 0.5 | 0.5 | 0.5 | 0.5 |

(continued)

| | | comparative examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| light resistance ΔE (50MJ cumulative irradiation) | 0MJ | 0.00 | 0.00 | 0.00 | 0.00 | 0.00 | 0.00 | 0.00 | 0.00 | 0.00 | 0.00 | 0.00 |
| | 50MJ | 9.59 | 3.41 | 4.25 | 6.71 | 2.71 | 1.12 | 4.05 | 1.48 | 0.62 | 0.95 | 1.23 |
| moist heat resistance (180hr moist heat treatment) | 0hr | 15 | 15 | 16 | 15 | 18 | 20 | 16 | 20 | 18 | 17 | 17 |
| | 180hr | 18 | 17 | 17 | 19 | 160 | could not measure | 25 | could not measure | 112 | 82 | 110 |
| mold deposits | | A | A | A | A | C | C | A | C | C | A | A |

[Table 6]

| | | examples | | | | comparative examples | | | | | |
|---|---|---|---|---|---|---|---|---|---|---|---|
| | | 20 | 21 | 22 | 23 | 1 | 2 | 9 | 11 | 12 | 13 |
| polycarbonate resin (A) | A1 | 49 | 49 | 60 | 60 | 49 | 49 | 49 | 49 | 49 | 49 |
| | A2 | 21 | 21 | 20 | | 21 | 21 | 21 | 21 | 21 | 21 |
| ABS resin (B) | B1 | 30 | | 20 | 40 | 30 | 30 | 30 | 30 | 30 | 30 |
| | B2 | | 30 | | | | | | | | |
| N-OR hindered amine (C-2) | C-2-1 | 0.3 | 0.3 | 0.3 | 0.3 | | | | | 0.1 | 1 |
| light stabilizer other than(C-2) (X) | X1 | | | | | | 0.3 | | | | |
| | X4 | | | | | | | 0.3 | | | |
| | X6 | | | | | | | | 0.3 | | |
| stabilizer (S) | S1 | 0.03 | 0.03 | 0.03 | 0.03 | 0.03 | 0.03 | 0.03 | 0.03 | 0.03 | 0.03 |
| | S2 | 0.05 | 0.05 | 0.05 | 0.05 | 0.05 | 0.05 | 0.05 | 0.05 | 0.05 | 0.05 |
| | S3 | | 0.01 | | | | | | | | |
| mold-release agent (R) | R1 | 0.1 | 0.1 | 0.1 | 0.1 | 0.1 | 0.1 | 0.1 | 0.1 | 0.1 | 0.1 |
| | R2 | 0.1 | 0.1 | 0.1 | 0.1 | 0.1 | 0.1 | 0.1 | 0.1 | 0.1 | 0.1 |
| carbon black | CB | 0.5 | 0.5 | 0.5 | 0.5 | 0.5 | 0.5 | 0.5 | 0.5 | 0.5 | 0.5 |
| light resistance ΔE (50MJ cumulative irradiation) | 0MJ | 0.00 | 0.00 | 0.00 | 0.00 | 0.00 | 0.00 | 0.00 | 0.00 | 0.00 | 0.00 |
| | 50MJ | 0.52 | 0.30 | 0.83 | 0.77 | 9.59 | 3.41 | 0.62 | 1.23 | 1.95 | 0.81 |
| moist heat resistance (180hr moist heat treatment) | 0hr | 16 | 15 | 14 | 19 | 15 | 15 | 18 | 17 | 16 | 20 |
| | 180hr | 20 | 16 | 16 | 22 | 18 | 17 | 112 | 110 | 19 | 26 |
| mold deposits | | A | A | A | A | A | A | C | A | A | C |

[Table 7]

| | | examples | | | | | | | | | | |
|---|---|---|---|---|---|---|---|---|---|---|---|---|
| | | 24 | 25 | 26 | 27 | 28 | 29 | 30 | 31 | 32 | 33 | 34 |
| polycarbonate resin (A) | A1 | 49 | 49 | 49 | 49 | 49 | 49 | 49 | 49 | 49 | 60 | 60 |
| | A2 | 21 | 21 | 21 | 21 | 21 | 21 | 21 | 21 | 21 | 20 | |
| ABS resin (B) | B1 | 30 | | 30 | | 30 | 30 | 30 | 30 | 30 | 20 | 40 |
| | B2 | | 30 | | 30 | | | | | | | |

(continued)

| | | examples | | | | | | | | | | |
|---|---|---|---|---|---|---|---|---|---|---|---|---|
| | | 24 | 25 | 26 | 27 | 28 | 29 | 30 | 31 | 32 | 33 | 34 |
| N-alkyl hindered amine (C-1) | C-1-1 | 0.15 | 0.15 | | | 0.17 | 0.13 | | 0.15 | 0.15 | 0.15 | 0.15 |
| | C-1-2 | | | 0.15 | C.15 | | | | 0.05 | | | |
| | C-1-3 | | | | | | | 0.15 | | 0.05 | | |
| | C-1-4 | | | | | | | | | | | |
| N-OR hindered amine (C-2) | C-2-1 | 0.15 | 0.15 | 0.15 | C.15 | 0.13 | 0.17 | 0.15 | 0.15 | 0.15 | 0.15 | 0.15 |
| light stabilizer other than(C) (X) | X1 | | | | | | | | | | | |
| | X2 | | | | | | | | | | | |
| | X3 | | | | | | | | | | | |
| | X4 | | | | | | | | | | | |
| | X5 | | | | | | | | | | | |
| | X6 | | | | | | | | | | | |
| stabilizer (S) | S1 | 0.03 | 0.03 | 0.03 | C.03 | 0.03 | 0.03 | 0.03 | 0.03 | 0.03 | 0.03 | 0.03 |
| | S2 | 0.05 | 0.05 | 0.05 | 0.05 | 0.05 | 0.05 | 0.05 | 0.05 | 0.05 | 0.05 | 0.05 |
| | S3 | | 0.01 | | C.01 | | | | | | | |
| | S4 | | | | | | | | | | | |
| mold-release agent (R) | R1 | 0.1 | 0.1 | 0.1 | 0.1 | 0.1 | 0.1 | 0.1 | 0.1 | 0.1 | 0.1 | 0.1 |
| | R2 | 0.1 | 0.1 | 0.1 | 0.1 | 0.1 | 0.1 | 0.1 | 0.1 | 0.1 | 0.1 | 0.1 |
| carbon black | CB | 0.5 | 0.5 | 0.5 | 0.5 | 0.5 | 0.5 | 0.5 | 0.5 | 0.5 | 0.5 | 0.5 |
| light resistance ΔE (50MJ cumulative irradiation) | 0MJ | 0 | 0 | 0 | 0 | 0 | 0 | 0 | 0 | 0 | 0 | 0 |
| | 50MJ | 0.92 | 0.71 | 0.94 | C.73 | 1.05 | 0.8 | 0.59 | 0.7 | 0.85 | 1.02 | 0.9 |
| moist heat resistance (180hr moist heat treatment) | 0hr | 17 | 16 | 17 | 16 | 17 | 17 | 17 | 18 | 17 | 14 | 19 |
| | 180hr | 23 | 19 | 29 | 23 | 24 | 22 | 28 | 25 | 26 | 20 | 26 |
| mold deposits | | A | A | A | A | A | A | A | A | A | A | B |

[Table 8]

| | | Comparative examples | | | |
|---|---|---|---|---|---|
| | | 35 | 36 | 37 | 38 |
| polycarbonate resin (A) | A1 | 49 | 49 | 60 | 60 |
| | A2 | 21 | 21 | 20 | |
| ABS resin(B) | B1 | 30 | 30 | 20 | 40 |
| | B2 | | | | |
| N-alkyl hindered amine (C-1) | C-1-1 | 0,3 | | 0,3 | 0,3 |
| | C-1-2 | | 0,3 | | |
| | C-1-3 | | | | |
| | C-1-4 | | | | |

(continued)

| | | Comparative examples | | | |
|---|---|---|---|---|---|
| | | 35 | 36 | 37 | 38 |
| light stabilizer other than(C-1) (X) | X1 | | | | |
| | X2 | | | | |
| | X3 | | | | |
| | X4 | | | | |
| | X5 | | | | |
| | X6 | | | | |
| stabilizer (S) | S1 | 0,03 | 0,03 | 0,03 | 0,03 |
| | S2 | | | | |
| | S3 | | | | |
| | S4 | | | | |
| mold-release agent (R) | R1 | 0,1 | 0,1 | 0,1 | 0,1 |
| | R2 | 0,1 | 0,1 | 0,1 | 0,1 |
| carbon black | CB | 0,5 | 0,5 | 0,5 | 0,5 |
| light resistance ΔE (50MJ cumulative irradiation) | 0MJ | 0,00 | 0,00 | 0,00 | 0,00 |
| | 50MJ | 1,28 | 1,48 | 1,50 | 1,06 |
| moist heat resistance (180hr moist heat treatment) | 0hr | 17 | 17 | 14 | 19 |
| | 180hr | 25 | 38 | 24 | 29 |
| mold deposits | | A | A | A | B |

(Examples 40, 42 and 44 and Comparative Examples 14, 15, 39, 41 and 43)

The components shown in Tables 1 and 2 were blended in the proportions (mass parts in all instances) given in the following Table 9; mixing was carried out for 20 minutes using a tumbler; this was followed by feed to a twin-screw extruder (TEM26SX, Toshiba Machine Co., Ltd.) equipped with one vent; kneading was performed using conditions of a screw rotation rate of 250 rpm, an ejection rate of 30 kg/hour, and a barrel temperature of 260°C; the extruded molten resin composition strand was quenched in a water tank; and pelletizing was carried out using a pelletizer to yield pellets of the polycarbonate resin composition.

[Evaluation of light resistance]

The pellets yielded by the production method described above were then dried for 5 hours at 100°C, followed by injection molding using an SE50DUZ injection molder from Sumitomo Heavy Industries, Ltd., a cylinder temperature of 260°C, and a mold temperature of 70°C to mold a plate (50 mm × 70 mm × 2 mm thickness).

Using a xenon weathering test instrument, a light resistance treatment was carried out on the plate using the conditions indicated below; the color before and after the light resistance treatment was measured; and the color difference ΔE was compared.

Light resistance test conditions

instrument used: Ci4000 Weather-Ometer, Atlas
filter/inner: quartz
filter/outer: soda lime
black panel temperature: 89°C
irradiance: 100 $W/m^2$ (300 to 400 nm)

cumulative irradiation: 25 $MJ/m^2$
no spray
humidity: 50%

The color was measured using an SE6000 spectral color difference meter from Nippon Denshoku Industries Co., Ltd., set to reflection method, D65 light source, and 10° field of vision, and the measurement was performed at the center of the plate provided by the method described above.

The results of the evaluations are given in Table 9.

[Table 9]

| | | Comp . Ex. | Example | compar. example | Comp. examples | Example | Comp. Example | Example | Comp. Example |
|---|---|---|---|---|---|---|---|---|---|
| | | 39 | 40 | 14 | 41 | 42 | 43 | 44 | 15 |
| polycarbonate resin (A) | A3 | 55 | 55 | 55 | 52 | 52 | 50,5 | 50,5 | 52 |
| ABS resin (B) | B1 | 45 | 45 | 45 | | | | | |
| | B3 | | | | 42,5 | 42,5 | 44 | 44 | 42,5 |
| | B4 | | | | 5,5 | 5,5 | 5,5 | 5,5 | 5,5 |
| N-alkyl hindered amine (C-1) | C-1-2 | 0,16 | | | | | | | |
| N-OR hindered amine (C-2) | C-2-1 | | 0,16 | | | 0,16 | | 0,16 | |
| | C-2-2 | | | | 0,16 | | 0,16 | | |
| light stabilizer other than above (X) | X7 | 0,16 | 0,16 | | 0,16 | 0,16 | 0,16 | 0,16 | |
| core/shell elastomer | EL1 | 11,2 | 11,2 | 11,2 | | | | | |
| | EL2 | | | | 5,5 | 5,5 | 5,6 | 5,6 | 5,3 |
| stabilizer (S) | S2 | 0.06 | 0,06 | 0,06 | 0,05 | 0,05 | 0,05 | 0,05 | 0,05 |
| | S5 | 0,33 | 0,33 | 0, 33 | 0,44 | 0,44 | 0,44 | 0,44 | 0,44 |
| mold-release agent (R) | R2 | 0,56 | 0,56 | 0, 56 | 0,55 | 0,55 | 0,55 | 0,55 | 0,55 |
| titanium oxide | TiO2 | | | | | | 2,3 | 2,3 | |
| colorant | PIG1 | | | | | | 0,11 | 0,11 | |
| | PIG2 | | | | | | 0,17 | 0,17 | |
| | FIG3 | | | | | | 0,59 | 0,59 | |
| light resistance ΔE (25MJ cumulative irradiation) | 0MJ | 0.00 | 0,00 | 0,30 | 0,00 | 0,00 | 0,00 | 0,00 | 0,00 |
| | 25MJ | 0,64 | 3,73 | 13,71 | 1,21 | 2,15 | 2,53 | 2,42 | 15,59 |

[Industrial Applicability]

The polycarbonate resin composition according to the present invention, because it exhibits an excellent light resistance and moist heat resistance and is also free of the problem of mold staining, can be used in a wide range of fields, for example, electrical and electronic equipment and components therefor, office automation equipment, mobile data terminal equipment, machine parts, household appliances, vehicle parts, building members, various containers, leisure goods, miscellaneous goods, lighting equipment, and so forth, and thus has a very high industrial applicability.

**Claims**

1. A polycarbonate resin composition comprising 0.12 to 0.8 mass parts of an N-OR hindered amine compound (C-2), per 100 mass parts of the total of (A) and (B) composed of more than 50 mass parts to not more than 95 mass parts of an aromatic polycarbonate resin (A) and less than 50 mass parts to at least 5 mass parts of an aromatic vinyl-diene-vinyl cyanide copolymer (B), wherein

   (B)is an acrylonitrile-butadiene-styrene resin and
   (C-2) is represented by formula (i)

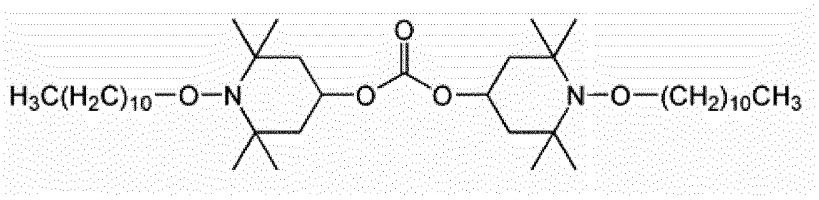

(i).

2. The polycarbonate resin composition according to claim 1, wherein the content of the N-OR hindered amine compound (C-2) is 0.12 to 0.7 mass parts per 100 mass parts of the total of the aromatic polycarbonate resin (A) and the aromatic vinyl-diene-vinyl cyanide copolymer (B).

3. The polycarbonate resin composition according to any one of claims 1 to 3, wherein the content of (B) is not more than 45 mass parts and at least 25 mass parts of the total of (A) and (B).

4. A molded article comprising the polycarbonate resin composition according to any one of claims 1 to 3.

**Patentansprüche**

1. Polycarbonatharzzusammensetzung, umfassend 0,12 bis 0,8 Massenteile einer N-OR gehinderten Aminverbindung (C-2), pro 100 Massenteile der Gesamtmenge von (A) und (B), zusammengesetzt aus mehr als 50 Massenteilen bis nicht mehr als 95 Massenteilen eines aromatischen Polycarbonatharzes (A) und weniger als 50 Massenteilen bis mindestens 5 Massenteilen eines aromatischen Vinyl-Dien-Vinylcyanid-Copolymers (B), wobei

   (B) ein Acrylnitril-Butadien-Styrol-Harz ist und
   (C-2) durch Formel (i) dargestellt wird

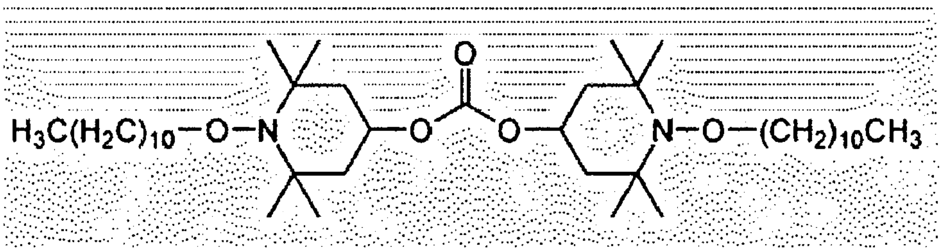

(i).

2. Polycarbonatharzzusammensetzung nach Anspruch 1, wobei der Gehalt der N-OR gehinderten Aminverbindung (C-2) 0,12 bis 0,7 Massenteile pro 100 Massenteile der Gesamtmenge des aromatischen Polycarbonatharzes (A) und des aromatischen Vinyl-Dien-Vinylcyanid-Copolymers (B) beträgt.

3. Polycarbonatharzzusammensetzung nach einem der Ansprüche 1 bis 3, wobei der Gehalt von (B) nicht mehr als 45 Massenteile und mindestens 25 Massenteile der Gesamtmenge von (A) und (B) beträgt.

4. Formartikel, umfassend die Polycarbonatharzzusammensetzung nach einem der Ansprüche 1 bis 3.

**Revendications**

1. Composition de résine de polycarbonate comprenant 0,12 à 0,8 partie en masse d'un composé amine encombrée N-OR (C-2), pour 100 parties en masse du total de (A) et (B) composé de plus de 50 parties en masse à pas plus de 95 parties en masse d'une résine de polycarbonate aromatique (A) et moins de 50 parties en masse à au moins 5 parties en masse d'un copolymère vinyle aromatique-diène-cyanure de vinyle (B), dans laquelle

   (B) est une résine acrylonitrile-butadiène-styrène et
   (C-2) est représenté par la formule (i)

   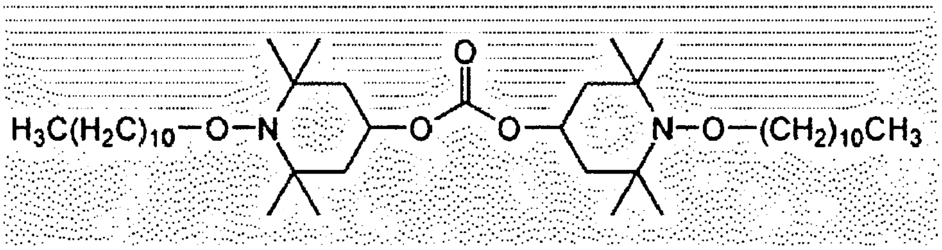

   (i).

2. Composition de résine de polycarbonate selon la revendication 1, dans laquelle la teneur en composé amine encombrée N-OR (C-2) est de 0,12 à 0,7 partie en masse pour 100 parties en masse du total de la résine de polycarbonate aromatique (A) et du copolymère vinyle aromatique-diène-cyanure de vinyle (B).

3. Composition de résine de polycarbonate selon l'une quelconque des revendications 1 à 3, dans laquelle la teneur en (B) n'est pas supérieure à 45 parties en masse et d'au moins 25 parties en masse du total de (A) et (B).

4. Article moulé comprenant la composition de résine de polycarbonate selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H07196904 A
- JP 2002003710 A
- JP 351 A
- JP 360 A
- JP 2003261629 A


### Non-patent literature cited in the description


- **RAJAN, VIPIN** ; **STEINHOFF, BERND** ; **ALIG, I.** ; **WÄBER, ROY** ; **WIESER, JUERGEN.** Online Monitoring of the Influence of the Chemical Structure of Hindered Amines on the Hydrolysis of Polycarbonate in a Polycarbonate/Poly(acrylonitrile-butadiene-styrene) Blend by Ultraviolet-Visible Spectroscopy.. *Journal of Applied Polymer Science - J APPL POLYM SCI.*, 2011, vol. 119
- *Macromol. Chem.*, 1965, vol. 88, 215
- *CHEMICAL ABSTRACTS*, 12041-93-6
- *CHEMICAL ABSTRACTS*, 68186-91-4
- *CHEMICAL ABSTRACTS*, 68186-90-3